# EUROPEAN PATENT SPECIFICATION

(11) **EP 1 002 837 B1**
(45) Date of publication and mention of the grant of the patent: **11.06.2003**
(21) Application number: 99123019.4
(22) Date of filing: 19.11.1999
(51) Int. Cl.: C08L 83/04

(54) **Room-temperature curable silicone rubber composition**
Bei Raumtemperatur härtbare Siliconkautschukzusammensetzung
Composition de caoutchouc silicone réticulable à la température ambiante

(30) Priority: 20.11.1998 JP 33008498
(43) Date of publication of application: 24.05.2000
(73) Proprietor: Dow Corning Toray Silicone Company, Ltd., Chiyoda-ku, Tokyo 100-0005 (JP)
(72) Inventor: Kazutoshi, Okabe Dow Corning Toray Silicone Co.Ltd, Ichihara-shi, Chiba Prefecture (JP); Hiroshi, Adachi Dow Corning Toray Silicone Co.Ltd, Ichihara-shi, Chiba Prefecture (JP); Toshio, Saruyama Dow Corning Toray Silicone Co.Ltd, Ichihara-shi, Chiba Prefecture (JP)
(74) Representative: Spott, Gottfried, Dr.

(56) References cited:
- EP-A- 0 002 745
- EP-A- 0 625 548
- EP-A- 0 787 766
- EP-A- 0 802 233
- DE-A- 3 221 655

## Description

### FIELD OF THE INVENTION

The present invention is a room-temperature curable silicone rubber composition. In particular, it is a room-temperature curable silicone rubber composition that provides excellent bonding durability after being cured, so that it retains a high degree of bonding power even when it is used outdoors for a long period of time.

### BACKGROUND OF THE INVENTION

Many room-temperature curable silicone rubber compositions are known that turn into silicone rubber after being cured at room temperature upon contact with the water in air. Among these are room-temperature curable silicone rubber compositions with the main constituents of polydiorganosiloxane and alkoxysilane that have alkoxysilyl groups on both ends of a molecular chain and that harden by releasing alcohol in the presence of an organo-titanium compound catalyst (also known as de-alcohol curable room-temperaturecurable silicone rubber compositions). These compositions find many applications as sealants for electric and electronic devices, bonding agents, and construction material sealants because of the absence of a noxious odor and their propensity not to corrode metals (see Japanese Patent Application No. 39-27643, Japanese Patent ApplicationNo. 55-43119, and Japanese Patent Application No. 62-252456). These types of room-temperature curable silicone rubber compositions, however, have a disadvantage in that their bonding capacity declines as a function of aging when the material is used outdoors for sealing or bonding glass for a long period of time. Therefore, these compositions are not completely satisfactory as construction material sealants, for example.

To solve the above problems, the inventors discovered that the addition of small amounts of a light stabilizer and/or a UV absorber to de-alcohol curable room-temperature curable silicone rubber compositions containing a specific polydiorganosiloxane as a main constituent solves the above problems, and consequently, have resulted in the present invention.

### SUMMARY OF THE INVENTION

The present invention is a room-temperature curable composition comprising:
(A) 100 parts by weight of a polydiorganosiloxane comprising
   (A-1) 20 to 100 parts by weight of a first polydiorganosiloxane,
   (A-2) 0 to 80 parts by weight of a second polydiorganosiloxane;
(B) 1 to 20 parts by weight of an alkoxysilane or an alkoxysilane partial hydrolysis condensate;
(C) 0.5 to 10 parts by weight of an organo-titanium compound;
(D) 0.01 to 5 parts by weight of a mixture of a hindered amine-based light stabilizer and a UV absorber selected from the group consisting of benzotriazole compounds. benzophenone compounds, arylester compounds, cyanoacrylate compounds, and triazine compounds.

The purpose of the present invention is to provide a room-temperature curable silicone rubber composition that excels in bonding durability and that can retain its bonding power even when used outdoors for a long period of time.

### BRIEF DESCRIPTION OF THE DRAWINGS

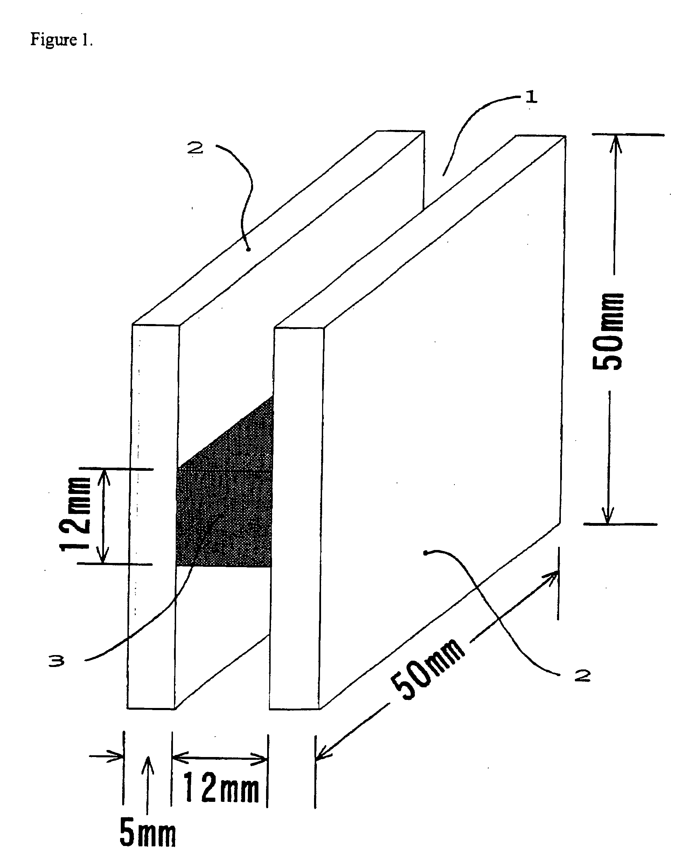

Figure 1 is a schematic diagram of the bonding durability test piece that was used for the evaluation of the bonding durability of the room-temperature curable silicone rubber composition in Examples 1 - 4 and Comparison Examples 1 - 2.

### Explanation of Reference Numerals

- 1: Bonding durability test piece
- 2: Float plate glass
- 3: Silicone rubber composition

### DETAILED DESCRIPTION OF INVENTION

The present invention is a room-temperature curable silicone rubber composition comprising:
(A) 100 parts by weight of a polydiorganosiloxane comprising
   (A-1) 20 to 100 parts by weight of a first polydiorganosiloxane, expressed by a general formula: 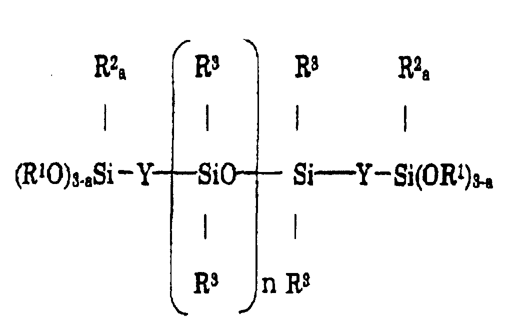 where R¹ and R² are an alkyl or an alkoxyalkyl, R³ is a monovalent hydrocarbon group, a halogenated hydrocarbon group, or a cyanoalkyl group, *a* is either 0 or 1, *n* is an integer that provides a viscosity of 20 to 1,000,000 mPa.s at 25 °C , *Y* is an oxygen atom, a bivalent hydrocarbon group, or a group expressed by a general formula: 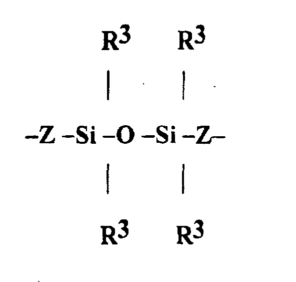 where R³ is as defined above, and Z is a bivalent hydrocarbon group;
   (A-2) 0 to 80 parts by weight of a second polydimethylsiloxane expressed by a general formula: 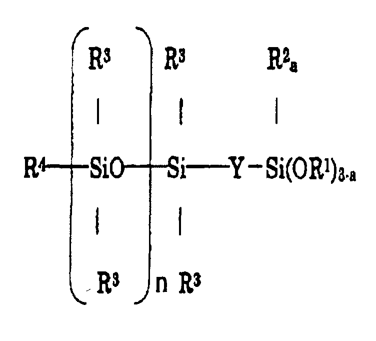 where R¹, R², R³, Y, *a*, and *n* are as defined above, and R⁴ is an alkyl or alkenyl group;
(B) 1 to 25 parts by weight of a cross-linking agent selected from an alkoxysilane expressed by the general formula R⁵_{b}Si(OR⁶)_{4-b,}
   where R⁵ is a monovalent hydrocarbon group, R⁶ is an alkyl group or an alkoxyalkyl group, and *b* is either 0 or 1, and a partial hydrolysis condensate of such an alkoxysilane;
(C) 0.5 to 10 parts by weight of an organo-titanium compound; and
(D) 0.01 to parts by weight of a mixture of a hindered amine-based light stabilizer and a UV absorber selected from the group consisting of benzotriazole compounds, benzophenone compounds, arylester compounds, cyanoacrylate compounds, and triazine compounds.

The polydiorganosiloxane of Component (A) used in the present invention is the main ingredient of the compositions of the present invention and comprises Components (A-1) and (A-2). Component (A-1) is a first polydiorganosiloxane having either an alkoxy or alkoxy-alkoxy group that is a hydrolyzable group occurring at both ends of a molecular chain. R¹ and R² in the above formula are alkyl groups such as a methyl, ethyl, propyl, or butyl groups; or alkoxyalkyl groups such as a methoxyethyl, ethoxyethyl, methoxypropyl, or methoxybutyl groups. R³ is an alkyl group such as a methyl, ethyl, propyl, or butyl group; a cycloalkyl group such as a cyclopentyl or cyclohexyl group; an alkenyl group such as a vinyl or allyl group; an aryl group such as a phenyl, tolyl, or naphthyl group; an aralkyl group such as a benzyl, phenylethyl or phenylpropyl group; a halogenated hydrocarbon group such as a chloromethyl, trifluoropropyl, or chloropropyl group; or a cyanoalkyl group such as β-cyanoethyl, γ-cyanopropyl, or γ-cyanopropyl group. Among these, the methyl group is preferable. Examples of bivalent hydrocarbon groups of Components Y and Z include methylene, propylene, and butylene groups.

Component (A-2) is a second polydiorganosiloxane having either an alkoxy or alkoxyalkoxy group that is a hydrolyzable group and that occurs only at the end of a molecular fragment chain. Component (A-2) has the property of reducing the modulus of the silicone rubber produced when the composition of the present invention is cured. Component (A-2) has a general formula 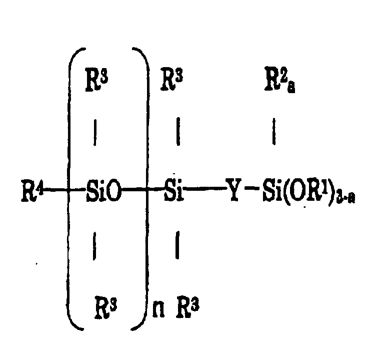 where the groups R¹, R², R³, a, n, and Z are as described in connection with Component (A-1) above, and R⁴ denotes an alkyl group such as a methyl, ethyl, propyl, or butyl group, or an alkenyl group such as a vinyl or allyl group. Component (A) is polydiorganosiloxane comprising per 100 weight parts, 20 to 100 parts by weight of Component (A-1) and 0 to 80 parts by weight of Component (A-2).

Component (B) is a cross-linking agent, and selected from an alkoxysilanes and alkoxysilane partial hydrolysis condensate. When selected from alkoxysilanes, Component (B) can be represented by the following general formula:

R⁵ _{b}Si(OR⁶)_{4-b}

where R⁵ is an alkyl group such as a methyl, ethyl, or propyl group; or a monovalent hydrocarbon group such as a vinyl, allyl, and related alkenyl group; where R⁶ is an alkyl group such as a methyl, ethyl, propyl, or butyl group, or an alkoxyalkyl group such as a methoxyethyl, ethoxyethyl, methoxypropyl, or methoxybutyl group; and where b is either 0 or 1.

Examples of Component (B) include: tri-functional alkoxysilanes such as methyl-trimethoxysilane, methyl-triethoxysilane, ethyl-trimethoxysilane,vinyl-trimethoxysilane, phenyl-trimethoxysilane,and methyl-trimethoxysilane;tetra-functional alkoxysilanes such as tetra-methoxysilane and tetra-ethoxysilane; and their hydrolyzed condensation products. Component (B) can be made either by using these compounds singly or by mixing two or more of the same.
Component (B) should be added in a range of about 1 to 25 parts by weight, and preferably 2 to 10 parts by weight, for 100 parts by weight of Component (A). An additive amount that is too low results in inadequate curing of the composition of the present invention or in gelling during storage due to an increase in viscosity. On the other hand, using an excessive amount of additive can result in high cost.

The organo-titanium compound, Component (C), used in the present invention is a catalyst for the curing of the composition of the present invention. Examples of such a titanium compound include: tetra-(i-propoxy) titanium, tetra-(n-butoxy) titanium, tetra-(t-butoxy) titanium, and other titanic acid esters; and titanium chelates such as di-(i-isopropoxy) bis-(acetoacetateethyl)titanium, di-(i-isopropoxy) bis-(acetoacetatemethyl) titanium, and di-(i-isopropoxy) bis-(acetylacetone) titanium.

Component (C) should be added in a range of 0.5 to 10 parts by weight relative to 100 parts by weight of Component (A); preferably, it should be used in a range of 1 to 5 parts by weight range. An additive amount that is too low results in slow curing of the composition of the present invention. An excessive amount of the additive causes poor storage stability and high cost.

The light stabilizer and UV absorber, which form Component (D), represent a key feature of the present invention, acting to confer bonding durability on the composition of the present invention.

In the present invention light stabilizers composed of hindered amine compounds are used. Examples of these light stabilizers composed of hindered amine compounds include compounds that can be represented by the following structural formulas:

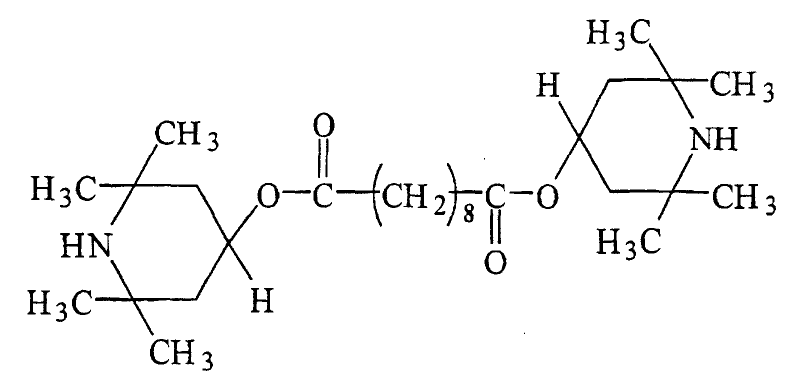

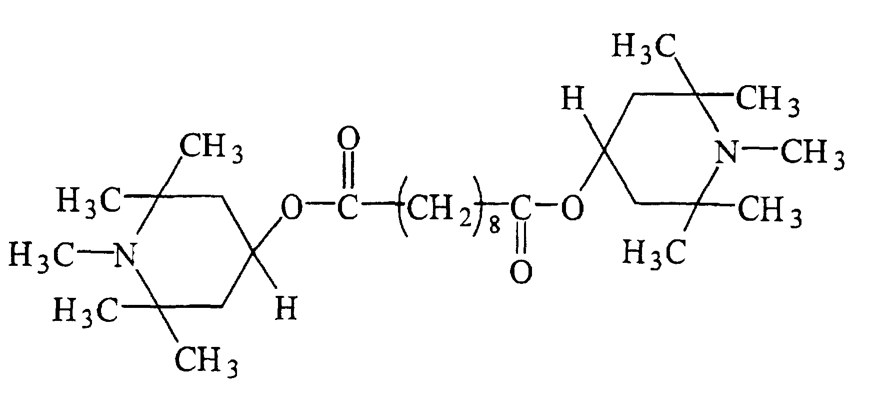

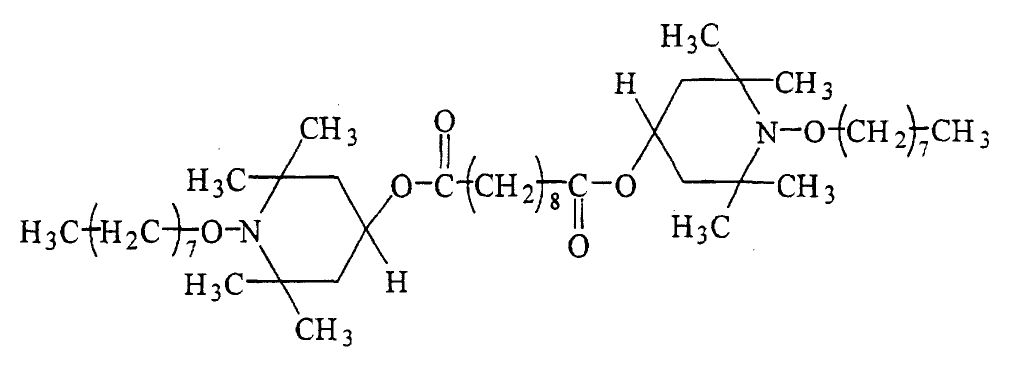

The following products can also be cited as examples: Adekastab LA-52, Adekastab LA-57, Adekastab LA-62, Adekastab LA-67, Adekastab LA-63P, and Adekastab LA-68LD (trademarks of Asahi Denka Kogyo K.K.), and CHIMASSORB 944 and CHIMASSORB 119 (trademarks of Ciba Specialty Chemicals K.K.).

Examples of UV absorbers that can be used include benzotriazole compounds, benzophenone compounds, arylester compounds, cyanoacrylate compounds, and triazine compounds. Among these, UV absorbers composed of cyanoacrylate and triazine compounds are preferable. Examples of UV absorbers composed of cyanoacrylate compounds include compounds that can be represented by the following structural formulas:

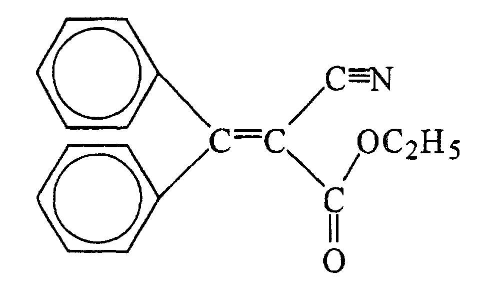

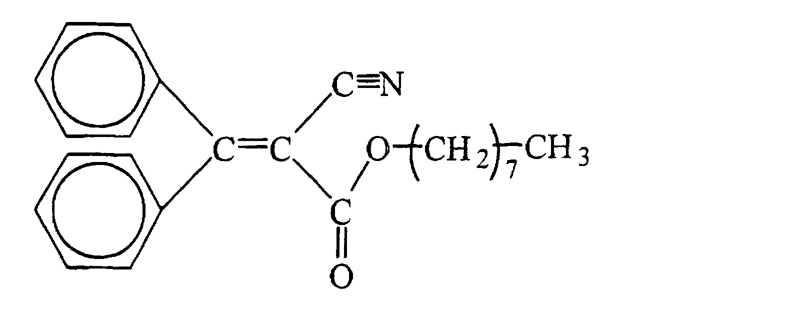

Similarly, examples of UV absorbers composed of triazine compounds include compounds that can be represented by the following structural formula:

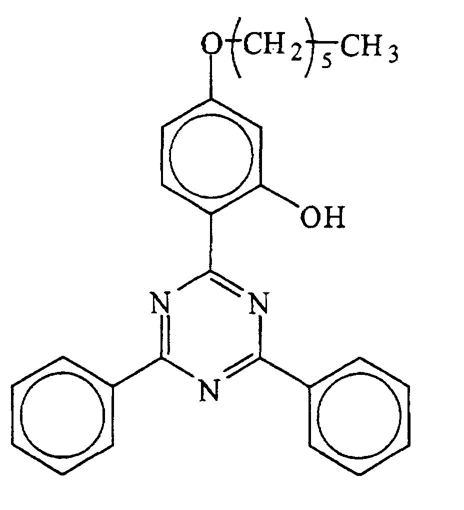

Component (D) should be added in a range of 0.01 to 5 parts by weight relative to 100 parts by weight of Component (A); preferably, it should be used in a range of 0.1 to 2 parts by weight. An additive amount that is too low results in reduced bonding durability, and an excessive amount of the additive causes a reduced bonding capacity and mechanical strength. Preferably Component (D) should be added as a combination of a light stabilizer and a UV absorber. When these agents are used in combination, the light stabilizer and UV absorber should be mixed in a weight ratio range of (1:0.1) to (1:2).

In order to achieve further enhancement of the bonding capacity of the composition of the present invention, composed of Components (A) through (D), the following silane coupling agents may be added in addition to the named components: a silane coupling agent containing amino groups, a coupling agent containing epoxy groups, and a silane-coupling agent containing silane and mercapto. These silane-coupling agents can be used either singly or in a combination of two or more silane-coupling agents. Reaction mixtures of silane-coupling agents containing organic amines and amino groups, and those containing epoxy groups can also be used.

Of the above-mentioned components, those containing amino groups provide an especially improved bonding capacity and are therefore effective.

Further, the following compounds can be added to ensure a low modulus for the cured rubber elastic material: bi-functional alkoxysilanes including dimethyl dimethoxy silane and diphenyl dimethoxy silane; and dimethyl polysiloxane, and dimethylsiloxane oligomer.

To an extent that does not deviate from the purpose of the present invention, the composition of the present invention, composed of Components (A) through (D), can be blended with known additives that are mixed with silicone rubber compositions, in addition to the components just mentioned. Such additives include: inorganic fillers, organic solvents, anti-mildew agents, flame retardants, heat resistant agents, plasticizers, thixotropic agents, adhesiveness-conferringagents, hardening accelerators, and pigments. Examples of inorganic fillers include aerosol silica, precipitating silica, quartz fine powder, calcium carbonate, aerosol titanium dioxide, diatomaceous earth, aluminum hydroxide powder, alumina powder, magnesium powder, zinc oxide powder, and zinc carbonate powder; and these substances made hydrophobic through surface treatment with organo silanes, silazanes, and siloxane oligomers.

The composition of the present invention can be easily manufactured by uniformly mixing Components (A) through (D) and the various additives in the absence of humidity. The composition of the present invention thus obtained should be stored in a hermetically sealed container. When exposed to air prior to use, the composition is cured by water present in the air, turning into a silicone rubber that has a rubber-like elasticity.

The composition of the present invention, as described above, possesses the characteristic of retaining its bonding capacity even when exposed to the elements outdoors for a long period of time. The composition is highly effective when used in applications for which this characteristic is required, including building material sealant, and especially construction material sealant that is applied to glass and other optically transparent materials.

The curable composition of the present invention, comprising Components (A) through (D), specifically containing a prescribed amount of Component (D), which is a light stabilizer and UV absorber, excels in bonding durability. As such, it has the characteristic of retaining the bonding capacity even when used outdoors for a long period of time.

### EXAMPLES

A description of the present invention with reference to the examples follows. In the following examples, all viscosity values are measured at 25°C. Also, in the following the abbreviation "Me" refers to a methyl group and "Et" to an ethyl group. The bonding durability of the room-temperature curable silicone rubber composition was evaluated using the following method:

### Method for the Evaluation of the Bonding Durability of the Room-Temperature Curable Silicone Rubber Composition

A bonding durability test piece was prepared according to the method set forth in JIS A 1439, Construction Material Sealant Test Methods. Referring to Figure 1, a bonding durability test piece **1** (also referred to as a "type H test piece"), was prepared by packing the room-temperature curable silicone rubber composition **3** between two float glass plates **2** (as defined under JIS R3202). Subsequently, the room-temperature curable silicone rubber composition was cured by holding it in quiescence for twenty-eight days at 23°C and 50% humidity. After that, bonding durability test pieces thus obtained were placed in a fluorescent UV light-reinforced accelerated exposure test apparatus (commercial name UVCON UC-1 made by Atlas Co., Ltd.). According to ASTM G53, the bonding durability test pieces were irradiated with UV rays across a glass plate by using a UVA-340 fluorescent lamp. Following the UV irradiation, bonding durability test pieces were removed after 1,000 hours, 2,000 hours, and 3,000 hours. They were subjected to stretching tests based upon JIS A1439, and the state of the silicone rubber breakage was observed. The results were noted as follows:
○: Breakage at the silicone rubber layer (cohesive failure rate: 100%)
▲: Partial boundary peeling (cohesive failure rate: 50 - 99%)
X: Boundary peeling (cohesive failure rate: 0 - 49%)

### EXAMPLE 1

A silicone rubber base compound was prepared by mixing 40 parts by weight of α,ω-triethoxysilylethylenepolydimethylsiloxane, indicated by Formula 1 below (where *n* denotes an integer that produces a viscosity of 15,000 mPa.s) with a 15,000 mPa.s viscosity; 60 parts by weight of α-methyl, ω-triethoxysilylethylenepolydimethylsiloxane,indicated by Formula 2 below (where *n* denotes an integer that produces a viscosity of 15,000 mPa.s) with a 15,000 mPa.s viscosity; and 12 parts by weight of dry-method silica with a BET method specific surface of 130 m²/g that was surface treated with dimethyldimethoxy silane and hexamethyl silazane. After that, the silicone rubber-base compound was mixed with 4.5 parts by weight of methyltrimethoxysilane, 3.0 parts by weight of tetra-(t-butoxy) titanium, and 0.5 parts by weight of a reaction mixture of γ-aminopropyltrimethoxysilane and γ-glycidoxypropyltrimethoxysilane (obtained by mixing γ-aminopropyltrimethoxy silane and γ-glycidoxypropyltrimethoxysilane in a 1:2 molar ratio and by holding the mixture in quiescence for four weeks under conditions of 25°C temperature and 50% humidity). Subsequently, 0.3 parts by weight of the light stabilizer (commercial name SANOL LS-770 made by Sankyo Co., Ltd.) indicated by Formula 3 below and 0.3 parts by weight of the UV absorber (commercial name Viosorb 930 made by Kyodo Chemical Co., Ltd.) indicated by Formula 4 below were mixed under a moisture excluded condition until the mixture was uniform. In this manner, a room-temperature curable silicone rubber composition was produced. The bonding durability of the room-temperature curable silicone rubber composition was measured and the results are summarized in Table 1 below.

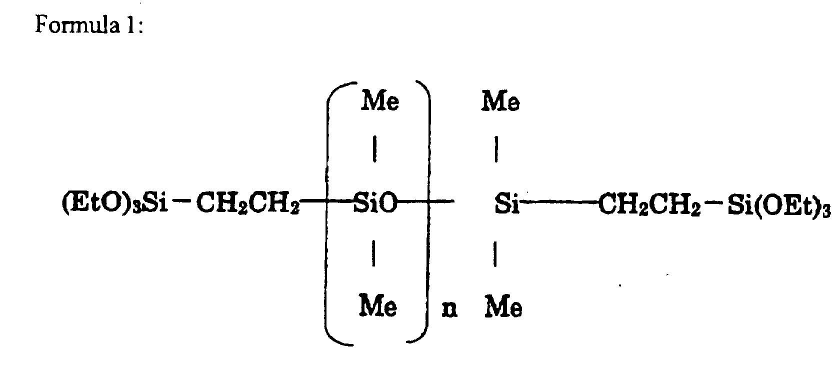

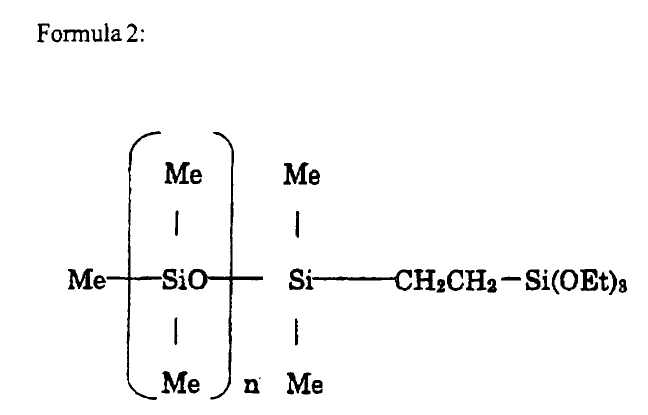

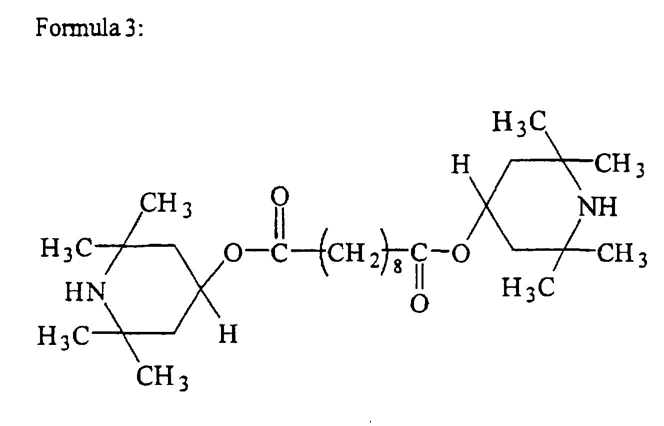

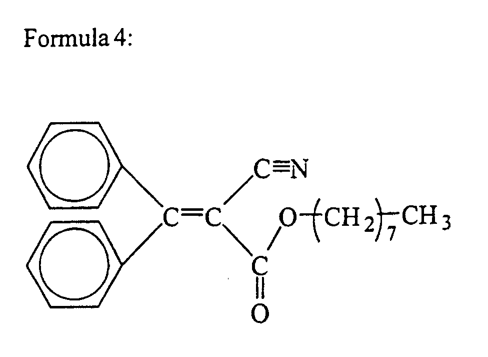

### COMPARISON EXAMPLE 1

A room-temperature curable silicone rubber composition was produced as in Example 1, except that the light stabilizer indicated by Formula 3, 0.3 parts by weight in Example 1, was not mixed. The bonding durability of the room-temperaturecurable silicone rubber composition was measured as in Example 1 and the results are summarized in Table 1 below.

### COMPARISON EXAMPLE 2

A room-temperature curable silicone rubber composition was produced as in Example 1, except that the UV absorber indicated by Formula 4, 0.3 parts by weight in Example 1, was not mixed. The bonding durability of the room-temperature curable silicone rubber composition was measured as in Example 1 and the results are summarized in Table 1 below.

### EXAMPLE 2

A silicone rubber base compound was prepared by mixing 100 parts by weight of α,ω-triethoxysilyl ethylene polydimethylsiloxane with a viscosity of 15,000 mPa.s, indicated by Formula 5, and 12 parts by weight of dry-method silica with a BET method specific surface of 130 m²/g that was surface treated with dimethyl dimethoxy silane and hexamethyl silazane. After that, the silicone rubber-based compound was mixed with 4.5 parts by weight of methyl trimethoxy silane, 3.0 parts by weight of tetra-(t-butoxy) titanium, and 0.5 parts by weight of a reaction mixture of γ-aminopropyl trimethoxy silane and γ-glycidoxy propyl trimethoxy silane (obtained by mixing γamino propyl trimethoxy silane and ω-glycidoxy propyl trimethoxy silane in a 1:2 molar ratio and by holding the mixture in quiescence for four weeks under conditions of 25°C temperature and 50% humidity). Subsequently, 0.3 parts by weight of the light stabilizer (commercial name SANOL LS-770 made by Sankyo Co., Ltd.) indicated by Formula 3 in Example 3 and 0.3 parts by weight of the UV absorber (commercial name Viosorb 930 made by Kyodo Chemical Co., Ltd.) indicated by Formula 4 were mixed under a moisture excluded condition until the mixture was uniform. In this manner, a room-temperature curable silicone rubber composition was produced. The bonding durability of the room-temperature curable silicone rubber composition was measured and the results are summarized in Table 1 below.

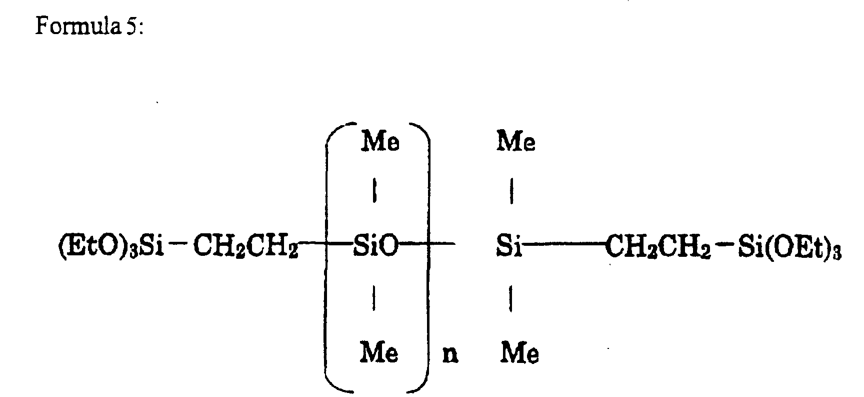

### COMPARISON EXAMPLE 3

Referring to Example 1, a room-temperature curable silicone rubber composition was produced as in Example 1, except that neither 0.3 parts by weight of light stabilizer nor 0.3 parts by weight of UV absorber was mixed. The bonding durability of the room-temperature curable silicone rubber composition was measured and the results are summarized in Table 1 below.

### COMPARISON EXAMPLE 4

Referring to Example 3, a room-temperaturecurable silicone rubber composition was produced as in Example 3, except that 0.3 parts by weight of triethyl amine was substituted for 0.3 parts by weight of light stabilizer. The bonding durability of the room-temperature curable silicone rubber composition was measured and the results are summarized in Table 1 below.

### COMPARISON EXAMPLE 5

Referring to Example 3, a room-temperaturecurable silicone rubber composition was produced as in Example 3, except that 0.3 parts by weight of γ-amino propyl trimethoxy silane was substituted for 0.3 parts by weight of light stabilizer. The bonding durability of the room-temperature curable silicone rubber composition was measured and the results are summarized in Table 1 below.

**Table 1.**

| Adhesion durability results | | | | | | | |
|---|---|---|---|---|---|---|---|
| UV irradiation time | Example | | Comparison example | | | | |
| | 1 | 2 | 1 | 2 | 3 | 4 | 5 |
| 0 hours (initial condition) | ○ | ○ | ○ | ○ | ○ | ○ | ○ |
| 1,000 hours | ○ | ○ | ○ | ○ | ○ | ○ | ○ |
| 2,000 hours | ○ | ○ | ○ | ○ | ▲ | ▲ | ▲ |
| 3,000 hours | ○ | ○ | ▲ | ○ | ▲ | ▲ | ▲ |
| 5,000 hours | ○ | ○ | ▲ | ▲ | ▲ | ▲ | ▲ |

## Claims

1. A room-temperaturecurable silicone rubber composition comprising:
(A) 100 parts of a polydiorganosiloxane comprising:
(A-1) 20 to 100 parts by weight of a first polydiorganosiloxane,expressed by a general formula: 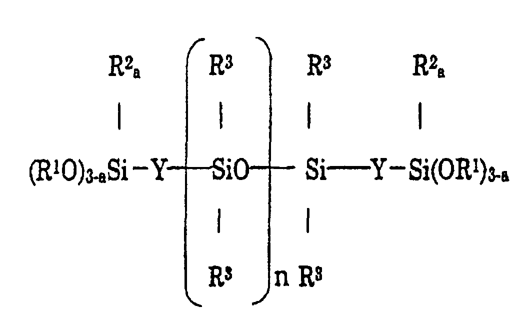 where R¹ and R² denote an alkyl or alkoxyalkyl group, R³ denotes a group chosen from among a monovalent hydrocarbon group, a halogenated hydrocarbon group, or a cyanoalkyl group; where *a* is either 0 or 1; where *n* is an integer that provides a viscosity of 20 to 1,000,000 mPa.s at 25°C ; and where *Y* is an oxygen atom, a bivalent hydrocarbon group, or a group expressed by a general formula: 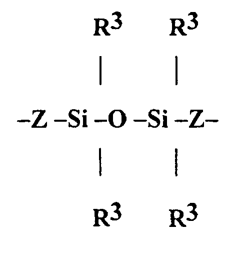 where R³ is as defined above, and Z is a bivalent hydrocarbon group; and
(A-2) 100 parts by weight of a second polydiorganosiloxane expressed by a general formula: 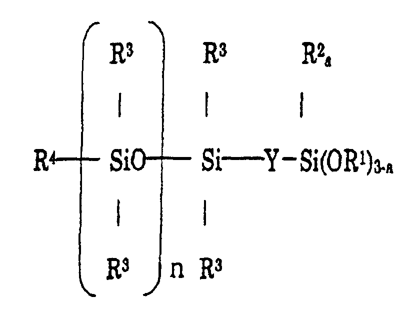 (where R¹, R², and R³ are as defined above, where R⁴ is an alkyl or alkenyl group, and where *Y*, *a*, and *n* are as defined above);
(B) 1 to 25 parts by weight of a cross-linking agent selected from alkoxysilanes expressed by the general formula R⁵_{b}Si(OR⁶)_{4-b,} (where R⁵ is a monovalent hydrocarbon group, R⁶ is an alkyl or alkoxyalkyl group, and *b* is either 0 or 1) and partial hydrolysis condensates of such alkoxysilanes;
(C) 0.5 to 10 parts by weight of an organo-titanium compound; and
(D) 0.01 to 5 parts by weight of a mixture of a hindered amine-based light stabilizer and a UV absorber selected from the group consisting of benzotriazole compounds, benzophenone compounds, arylester compounds, cyanoacrylate compounds, and triazine compounds.

2. The room-temperature curable silicone rubber composition of Claim 1, wherein the Component Y in the Components (A-1) and (A-2) is an alkylene group.

3. The room-temperature curable silicone rubber composition of Claim 1, wherein
Component (B) is selected from the group consisting of tri-functional alkoxysilanes tetrafunctional alkoxysilanes, the partial hydrolysis condensates of tri-functional alkoxysilanes, and the partial hydrolysis condensates of tetrafunctional alkoxysilanes.

4. The room-temperature curable silicone rubber composition of Claim 1 wherein Component (B) is used at 2 to 10 parts by weight for each 100 parts by weight of Component (A).

5. The room-temperature curable silicone rubber composition of Claim 1 wherein the organo-titanium compound of Component (C) is selected from the group consisting of titanic acid esters and titanium chelates.

6. The room-temperaturecurable silicone rubber composition of Claim 1 wherein the hindered amine-based light stabilizer and the UV absorber are in a ratio of from 1:0.1 to 1:2 by weight.

7. The room-temperature curable silicone rubber composition of Claim 1 wherein the hindered amine-based light stabilizer is selected from compounds represented by the structural formulas: 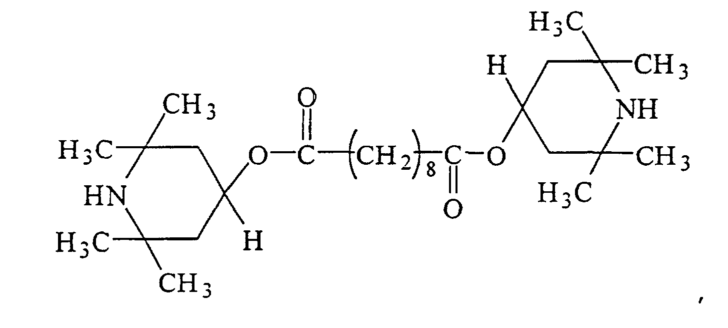 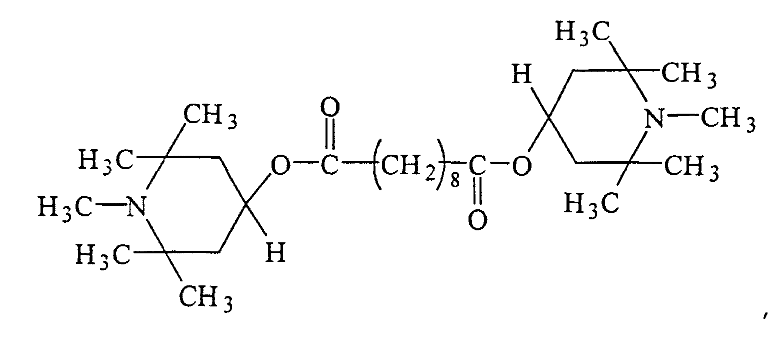 and

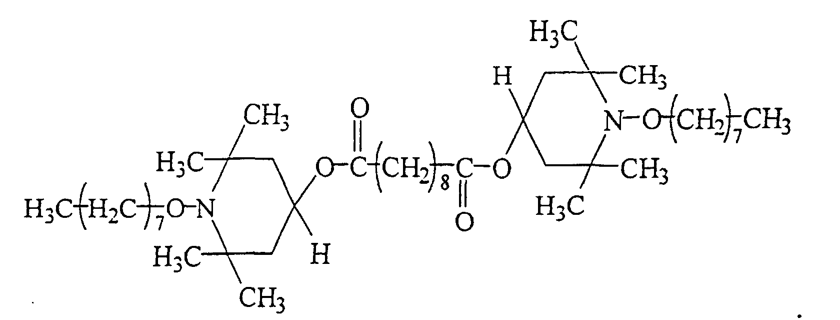

8. The room-temperature curable silicone rubber composition of Claim 1 wherein the UV absorber is selected from cyanoacrylates represented by the structural formulas 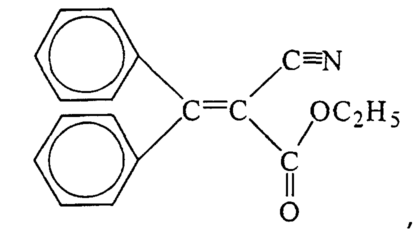 and

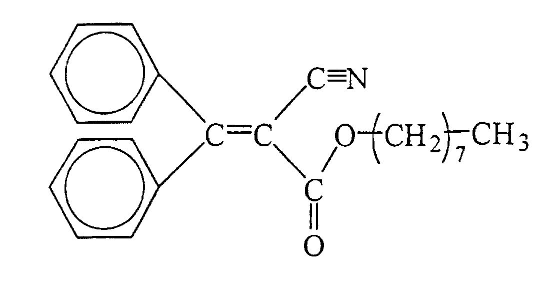

9. The room-temperature curable silicone rubber composition of Claim 1, further comprising a silane coupling agent selected from the group consisting of silane coupling agents containing amino groups, silane coupling agents containing epoxy groups, silane coupling agents containing mercapto groups, and reaction mixtures made from the reaction of silane coupling agents containing amine and amino groups and those containing epoxy groups.

10. The room-temperature curable silicone rubber composition of Claim 9 wherein the silane coupling agent is a reaction mixture of γ-aminopropyltrimethoxysilane and γ-glycidoxypropyltrimethoxysilane.

## Patentansprüche

1. Bei Raumtemperatur härtbare Siliconkautschukzusammensetzung umfassend:
(A) 100 Teile eines Polydiorganosiloxans umfassend:
(A-1) 20 bis 100 Gew.-Teile eines ersten Polydiorganosiloxans der allgemeinen Formel: 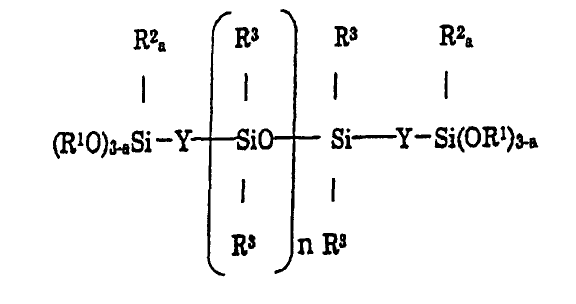 wobei R¹ und R² für eine Alkyl- oder Alkoxyalkylgruppe stehen, R³ für eine Gruppe steht, die aus einer einwertigen Kohlenwasserstoffgruppe, einer halogenierten Kohlenwasserstoffgruppe oder einer Cyanoalkylgruppe ausgewählt ist, wobei a entweder 0 oder 1 bedeutet, wobei n eine ganze Zahl ist, die eine Viskosität von 20 bis 1.000.000 mPa.s bei 25 °C liefert, und wobei Y ein Sauerstoffatom, eine zweiwertige Kohlenwasserstoffgruppe oder eine Gruppe der folgenden allgemeinen Formel bedeutet: 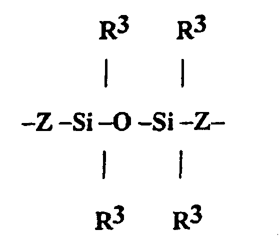 wobei R³ die oben angegebene Bedeutung besitzt und Z für eine zweiwertige Kohlenwasserstoffgruppe steht; und
(A-2) 100 Gew.-Teile eines zweiten Polydiorganosiloxans der allgemeinen Formel: 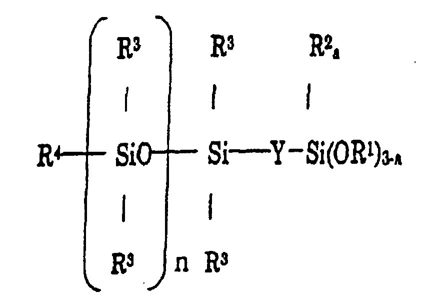
wobei R¹, R² und R³ die oben angegebene Bedeutung besitzen, wobei R⁴ für eine Alkyl- oder Alkenylgruppe steht und wobei Y, a und n die oben angegebene Bedeutung besitzen;
(B) 1 bis 25 Gew.-Teile eines Vernetzungsmittels, das aus Alkoxysilanen der allgemeinen Formel R⁵_{b}Si(OR⁶)_{4-b} (wobei R⁵ für eine einwertige Kohlenwasserstoffgruppe steht, R⁶ eine Alkyl- oder Alkoxyalkylgruppe bedeutet und b entweder 0 oder 1 ist) und Teilhydrolysekondensaten derartiger Alkoxysilane ausgewählt ist;
(C) 0,5 bis 10 Gew.-Teile einer Organotitanverbindung und
(D) 0,01 bis 5 Gew.-Teile eines Gemisches aus einem Lichtstabilisator auf Basis eines gehinderten Amins und einem UV-Absorber, der aus Benzotriazolverbindungen, Benzophenonverbindungen, Arylesterverbindungen, Cyanoacrylatverbindungen und Triazinverbindungen ausgewählt ist.

2. Bei Raumtemperatur härtbare Siliconkautschukzusammensetzung nach Anspruch 1, wobei die Komponente Y in den Komponenten (A-1) und (A-2) eine Alkylengruppe ist.

3. Bei Raumtemperatur härtbare Siliconkautschukzusammensetzung nach Anspruch 1, wobei die Komponente (B) aus trifunktionellen Alkoxysilanen, tetrafunktionellen Alkoxysilanen, den Teilhydrolysekondensaten von trifunktionellen Alkoxysilanen und den Teilhydrolysekondensaten von tetrafunktionellen Alkoxysilanen ausgewählt ist.

4. Bei Raumtemperatur härtbare Siliconkautschukzusammensetzung nach Anspruch 1, wobei die Komponente (B) in einer Menge von 2 bis 10 Gewichtsteilen pro 100 Gewichtsteile der Komponente (A) verwendet wird.

5. Bei Raumtemperatur härtbare Siliconkautschukzusammensetzung nach Anspruch 1, wobei die Organotitanverbindung der Komponente (C) aus Titansäureestern und Titanchelaten ausgewählt ist.

6. Bei Raumtemperatur härtbare Siliconkautschukzusammensetzung nach Anspruch 1, wobei der Lichtstabilisator auf Basis eines gehinderten Amins und der UV-Absorber in einem Gewichtsverhältnis von 1:0,1 bis 1:2 vorliegen.

7. Bei Raumtemperatur härtbare Siliconkautschukzusammensetzung nach Anspruch 1, wobei der Lichtstabilisator auf Basis eines gehinderten Amins aus Verbindungen der folgenden Strukturformeln ausgewählt ist: 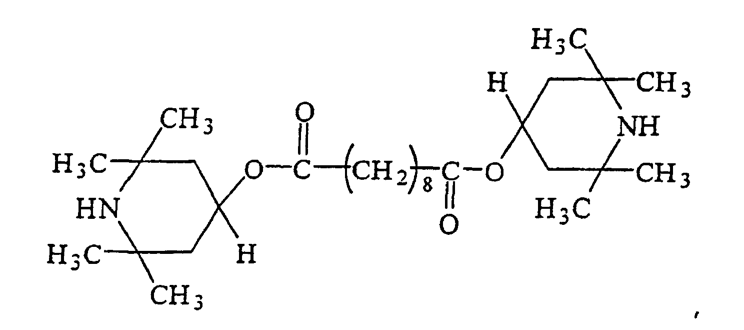 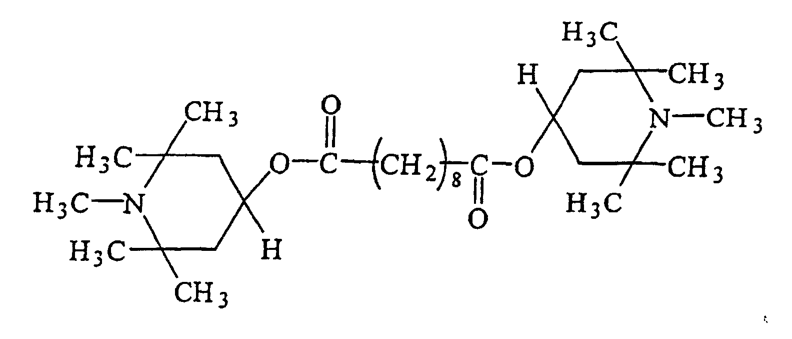 und

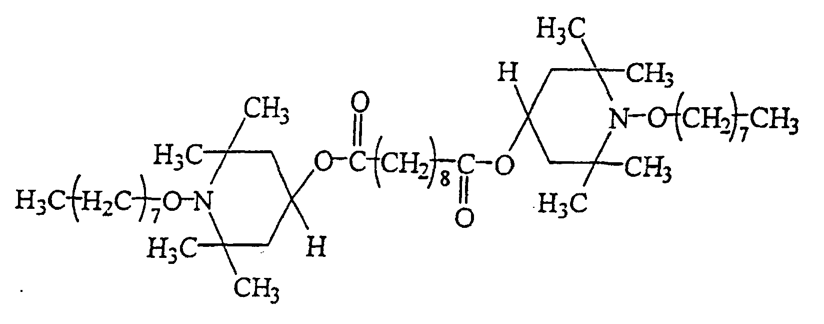

8. Bei Raumtemperatur härtbare Siliconkautschukzusammensetzung nach Anspruch 1, wobei der UV-Absorber aus Cyanoacrylaten der folgenden Strukturformeln ausgewählt ist: 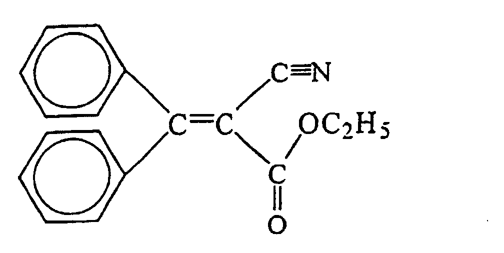 und

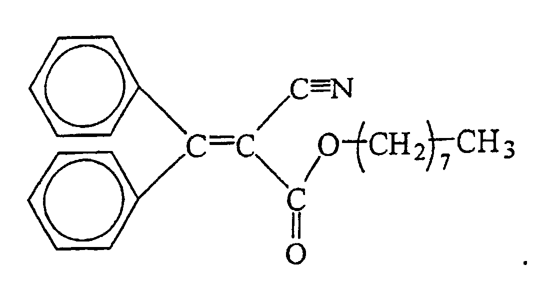

9. Bei Raumtemperatur härtbare Siliconkautschukzusammensetzung nach Anspruch 1, die ferner ein Silankupplungsmittel umfasst, das aus Silankupplungsmitteln mit Aminogruppen, Silankupplungsmitteln mit Epoxygruppen, Silankupplungsmitteln mit Mercaptogruppen und Reaktionsgemischen von Silankupplungsmitteln mit Amin- und Aminogruppen und solchen mit Epoxygruppen ausgewählt ist.

10. Bei Raumtemperatur härtbare Siliconkautschukzusammensetzung nach Anspruch 9, wobei das Silankupplungsmittel ein Reaktionsgemisch von γ-Aminopropyltrimethoxysilan und γ-Glycidoxypropyltrimethoxysilan ist.

## Revendications

1. Composition de caoutchouc silicone réticulable à température ambiante comprenant :
(A) 100 parties d'un polydiorganosiloxane comprenant :
(A-1) 20 à 100 parties en poids d'un premier polydiorganosiloxane, exprimé par une formule générale : 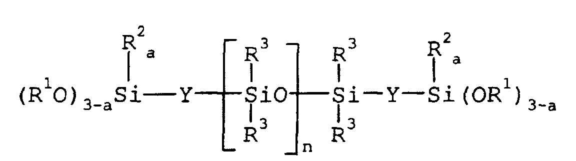 où R¹ et R² désignent un groupe alkyle ou alcoxyalkyle, R³ désigne un groupe choisi parmi un groupe hydrocarbure monovalent, un groupe hydrocarbure halogéné, ou un groupe cyanoalkyle ; où a est soit 0 soit 1 ; où n est un nombre entier qui propose une viscosité de 20 à 1.000.000 mPa/s à 25°C ; et où Y est un atome d'oxygène, un groupe hydrocarbure bivalent, ou un groupe exprimé par une formule générale : 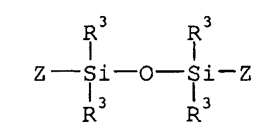 où R³ est tel que défini ci-dessus, et Z est un groupe hydrocarbure bivalent ; et
(A-2) 100 parties en poids d'un second polydiorganosiloxane exprimé par une formule générale : 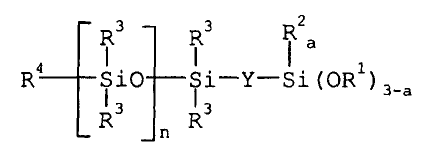 (où R¹, R² et R³ sont tels que définis ci-dessus, où R⁴ est un groupe alkyle ou alkényle, et où Y, a, et n sont tels que définis ci-dessus) ;
(B) 1 à 25 parties en poids d'un agent de réticulation choisi dans des alcoxysiloxanes exprimés par la formule générale R⁵_{b}Si(OR⁶)_{4-b}, (où R⁵ est un groupe hydrocarbure monovalent, R⁶ est un groupe alkyle ou alcoxyalkyle, et b est soit 0 soit 1) et des condensats d'hydrolyse partielle de tels alcoxysiloxanes ;
(C) 0,5 à 10 parties en poids d'un composé organo-titane ; et
(D) 0,01 à 5 parties en poids d'un mélange d'un stabilisateur de lumière à base d'amine encombrée et d'un absorbeur d'UV choisi dans le groupe comprenant des composés benzotriazole, des composés benzophénone, des composés arylester, des composés cyanoacrylate, et des composés triazole.

2. Composition de caoutchouc silicone réticulable à température ambiante selon la revendication 1, dans laquelle le composant Y dans les composants (A-1) et (A-2) est un groupe alkylène.

3. Composition de caoutchouc silicone réticulable à température ambiante selon la revendication 1, dans laquelle le composant (B) est choisi dans le groupe comprenant des alcoxysilanes trifonctionnels, des alcoxysilanes tétrafonctionnels, des condensats d'hydrolyse partielle d'alcoxysilanes trifonctionnels, et des condensats d'hydrolyse partielle d'alcoxysilanes tétrafonctionnels.

4. Composition de caoutchouc silicone réticulable à température ambiante selon la revendication 1, dans laquelle le composant (B) est utilisé de 2 à 10 parties en poids pour 100 parties en poids de composant (A).

5. Composition de caoutchouc silicone réticulable à température ambiante selon la revendication 1, dans laquelle le composé organo-titane du composant (C) est choisi dans le groupe comprenant des esters d'acide titanique et des chélates du titane.

6. Composition de caoutchouc silicone réticulable à température ambiante selon la revendication 1, dans laquelle le composant stabilisateur de lumière à base d'amine encombrée et l'absorbeur d'UV sont dans un rapport de 1:0,1 à 1:2 en poids.

7. Composition de caoutchouc silicone réticulable à température ambiante selon la revendication 1, dans laquelle le composant stabilisateur de lumière à base d'amine encombrée est choisi à partir des composés représentés par les formules structurales : 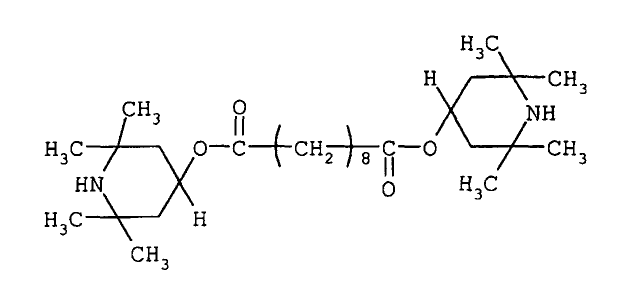 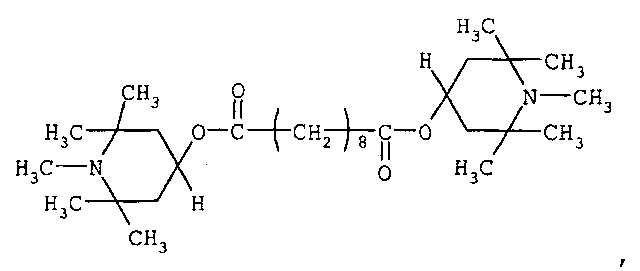 et

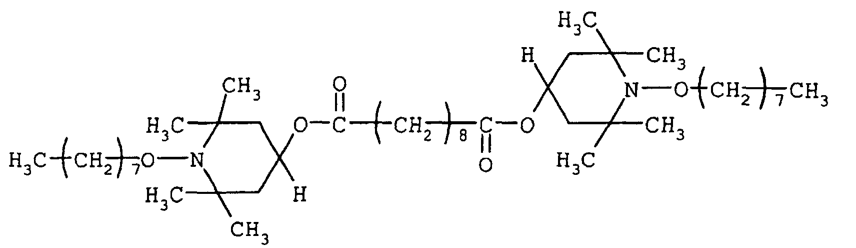

8. Composition de caoutchouc silicone réticulable à température ambiante selon la revendication 1, dans laquelle l'absorbeur d'UV est choisi dans des cyanoacrylates représentés par les formules structurales 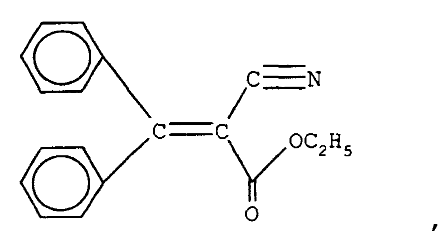 et

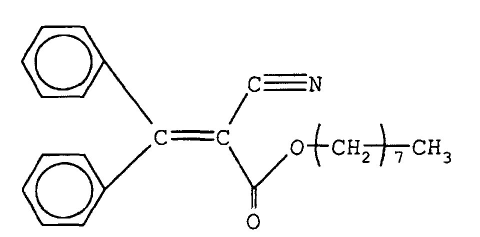

9. Composition de caoutchouc silicone réticulable à température ambiante selon la revendication 1, comprenant de plus un agent de couplage au silane choisi dans le groupe comprenant des agents de couplage au silane contenant des groupes amino, des agents de couplage au silane contenant des groupes époxy, des agents de couplage au silane contenant des groupes mercapto, et des mélanges réactionnels faits de la réaction des agents de couplage au silane contenant des groupes amines et amino, et ceux contenant des groupes époxy.

10. Composition de caoutchouc silicone réticulable à température ambiante selon la revendication 9 dans laquelle l'agent de couplage au silane est un mélange réactionnel de γ-aminopropyltriméthoxysiloxane et de γ-glycidoxypropyltriméthoxysiloxane.
